(19) **Europäisches Patentamt / European Patent Office / Office européen des brevets**

(11) **EP 4 324 163 B1**

(12) **EUROPEAN PATENT SPECIFICATION**

(45) Date of publication and mention
of the grant of the patent:
**14.01.2026 Bulletin 2026/03**

(21) Application number: **22721667.8**

(22) Date of filing: **07.04.2022**

(51) International Patent Classification (IPC):
*H04L 9/40* $^{(2022.01)}$      *G06F 21/55* $^{(2013.01)}$
*G06N 3/006* $^{(2023.01)}$      *G06N 3/088* $^{(2023.01)}$

(52) Cooperative Patent Classification (CPC):
**H04L 63/1408; G06F 21/554; H04L 63/1433;
H04L 63/1441;** G06N 3/006; G06N 3/088

(86) International application number:
**PCT/EP2022/059230**

(87) International publication number:
**WO 2022/218806 (20.10.2022 Gazette 2022/42)**

(54) **NETWORK PROTECTION**

NETZWERKSCHUTZ

PROTECTION DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2021 GB 202105265**

(43) Date of publication of application:
**21.02.2024 Bulletin 2024/08**

(73) Proprietor: **British Telecommunications public
limited company
London E1 8EE (GB)**

(72) Inventor: **BEARD, Alfie
London E1 8EE (GB)**

(74) Representative: **British Telecommunications
public limited company
Intellectual Property Department
9th Floor
One Braham
Braham Street
London E1 8EE (GB)**

(56) References cited:
**WO-A1-2021/001236**      **US-A1- 2005 257 269**
**US-A1- 2021 064 762**

- **STAVROS D NIKOLOPOULOS ET AL:
"Preventing Malware Pandemics in Mobile
Devices by Establishing Response-time
Bounds", ARXIV.ORG, CORNELL UNIVERSITY
LIBRARY, 201 OLIN LIBRARY CORNELL
UNIVERSITY ITHACA, NY 14853, 4 July 2016
(2016-07-04), XP080711903**

## Description

### Field of the Invention

The present invention relates to protecting a network comprising a plurality of computer systems. In particular, it relates to the use of an intelligent agent to determine a response to a threat that is detected in the network.

### Background to the Invention

Networks of computer systems can be susceptible to many types of threat which can have a negative impact on the computer systems within the network and/or the network as a whole. Some threats may be intentionally carried out be a threat actor (attacker) by exploiting vulnerabilities in the network. Such threats may be referred to as an attack on the network. For example, computer systems within the network can become infected with malicious software (commonly referred to as malware), or be the target of other types of attack intended to affect their normal operation (e.g. denial of service attacks, hijacking, or the like). Other types of threats faced by a network may be unintentional (i.e. not initiated by any particular actor), such as hardware failure of devices within the network.

Over time, the overall number and variety of attacks is steadily increasing. In order to help protect against such attacks, specialised computer systems, commonly referred to as Intrusion Detection Systems (IDSs), are deployed within networks which attempt to detect such attacks taking place. Such systems may then notify a network administrator that an attack is taking place, thereby allowing the network administrator to investigate the attack and take an appropriate action.

To detect attacks, an IDS can monitor communications occurring with the network and attempt to spot malicious communications associated with (i.e. resulting from) an attack. One approach that can be used to spot malicious communications is so-called signature-based detection. In this approach, communications are compared to the signatures of known attacks to see if they match, in which case the attack is detected. However, this approach can only detect attacks that are already known. Accordingly, another approach that is utilised is so called anomaly-based detection. This approach seeks to determine a model of normal behaviour or characteristics of the traffic in a network and then uses that model to identify traffic which behaves differently or has different characteristics from the normal traffic (i.e. anomalous traffic). Since anomaly-based detection relies on knowledge of a system's normal behaviour, as opposed to knowledge of the characteristics of a specific attack (as in the case of signature-based detection), anomaly-based detection can detect new attacks that have not been previously seen.

In order to aid network administrators in responding to a threats efficiently, a network incident response playbook may be maintained which details the actions to be taken in response to specific threats against particular parts of a network. Accordingly, when a known threat is detected, the playbook can be used to determine a response to the threat without needing to carry out (or repeat) any analysis of the threat. However, where a new threat is encountered for which a response has not already been determined, a network administrator may need to carry out a detailed analysis of the threat to determine what actions should be taken to respond to the threat in order to best protect the network from the threat (or at least to mitigate the impact of the threat).

Where a response to a particular threat has already been determined (such as may be recorded in a network incident response playbook), the actions required to be taken in the network to enact the response may be turned into a script which can be automatically executed in response to detecting that specific threat against the relevant parts of the network. This can help speed up the response time for responding to detected threats, whilst at the same time freeing up network administrators to carry out other work. A system which both detects and automatically responds to threats may be referred to as an Intrusion Prevention System (IPS).

US 2005/0257269 A1 discloses a response system which produces strategies to contain hosts compromised by a worm.

US 2021/0064762 A1 discloses that an intelligent-adversary simulator can construct a graph of a virtualized instance of a network including devices connecting to the virtualized instance of the network as well as connections and pathways through the virtualized instance of the network.

The paper "Preventing Malware Pandemics in Mobile Devices by Establishing Response-time Bounds" by Nikolopoulos et al. discloses a study of the propagation of a malicious software in a network of mobile devices, which are moving a specific city area, and establish time bounds for the activation of a counter-measure, i.e., an antivirus or a cleaner in order to prevent pandemic.

WO 2021/001236 A1 discloses a computer implemented method to block malware propagation in a network of computer systems.

### Summary of the invention

With the number of threats faced by computer networks increasing rapidly, network administrators commonly find themselves faced with an overwhelming number of alerts to deal with. In particular, as the number of new attacks increases, an increasing amount of effort is required to determine appropriate responses to those attacks. Similarly, responses to known threats may need to be reviewed and adapted as the size and complexity of a network changes. Furthermore, in many situations security analysts are unsure of the appropriate response. Therefore, although machine learning has been successfully applied to detecting new threats, this has yielded another problem in determining how those new threats should be handled (that is, what an appropriate response to those threats should be).

The present invention accordingly provides, in a first aspect, a computer implemented method for protecting a network comprising a plurality of computer systems, the method comprising: receiving an indication that one or more anomalies which have been determined to be associated with a threat have been detected within the network; generating a model of the network for simulating the propagation of the threat within the network, the model comprising one or more properties representing the incidence of the threat within the network; training an intelligent agent to generate a response to the threat, the intelligent agent being trained using a reinforcement learning technique by using the model of the network to evaluate the effectiveness of taking different actions to counter the threat based on a simulated propagation of the threat within the model, the simulated propagation being determined based on a threat propagation model and the one or more properties representing the incidence of the threat within the network; using the intelligent agent to determine a response to the threat, the response comprising one or more actions to be taken in relation to the network; and applying the response to the network by causing the one or more actions to be taken in relation to the network.

The method may further comprise determining whether a predetermined response to the threat is available, wherein: the predetermined response may be applied to the network in response to determining that a predetermined response is available; and the steps of generating a model of the network, training an intelligent agent and using the intelligent agent to determine a response to the threat may be performed in response to a determination that no predetermined response is available.

The method may further comprise storing the response to the threat that was determined by the intelligent agent to be used as predetermined response to the threat in the future.

The intelligent agent that is trained may be an intelligent agent that has already been trained to generate a response to a previous threat within the network and the training may serve to adapt the intelligent agent to respond to the detected threat.

The method may further comprise causing a predetermined initial response to be applied to the network prior to determining the response to the threat using the intelligent agent.

The method may further comprise estimating a propagation rate of the threat in the network from the one or more anomalies; and configuring the threat propagation model to reflect the estimated propagation rate of the threat in the network.

The threat may be a malware threat and the one or more properties representing the incidence of the threat comprise a respective status of each of the plurality of computer systems indicating whether that computer system has been determined to have been infected by the malware. The one or more actions for responding to the malware threat may comprise one or more of: isolating a computer system from the network; upgrading a network defence level; downgrading a network defence level; running enhanced detection on one or more computer systems; deploying an intrusion detection system; and changing one or more firewall rules.

The threat may be a Distributed Denial-of-Service, DDoS, attack and the one or more properties representing the incidence of the threat comprise an indication of a respective bandwidth utilisation for each link in the network. The one or more actions for responding to the DDoS attack may comprise one or more of: isolating a computer system from the network; reconfiguring the network to remove one or more links; reconfiguring the network to reroute traffic; and reconfiguring the network to add one or more additional links

The present invention accordingly provides, in a second aspect, a computer system comprising a processor and a memory storing computer program code for performing a method according to the first aspect.

The present invention accordingly provides, in a third aspect, a computer program which, when executed by one or more processors, is arranged to carry out a method according to the first aspect.

## Brief Description of the Figures

In order that the present invention may be better understood, embodiments thereof will now be described, by way of example only, with reference to the accompanying drawings, in which:

Figure 1 is a block diagram of a computer system suitable for the operation of embodiments of the present invention;

Figure 2 is a block diagram of a computer network which embodiments of the present invention may act to protect; and

Figure 3 is a flowchart illustrating a method for protecting a network according to embodiments of the present invention.

## Detailed Description of Embodiments

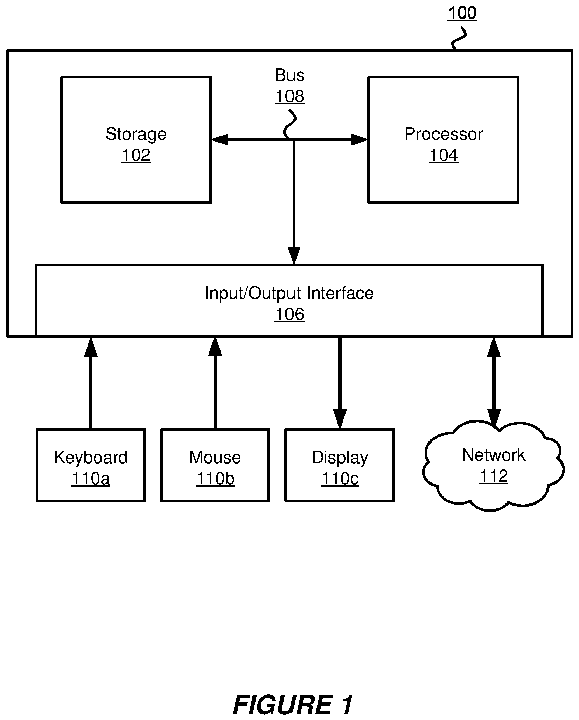

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 100 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

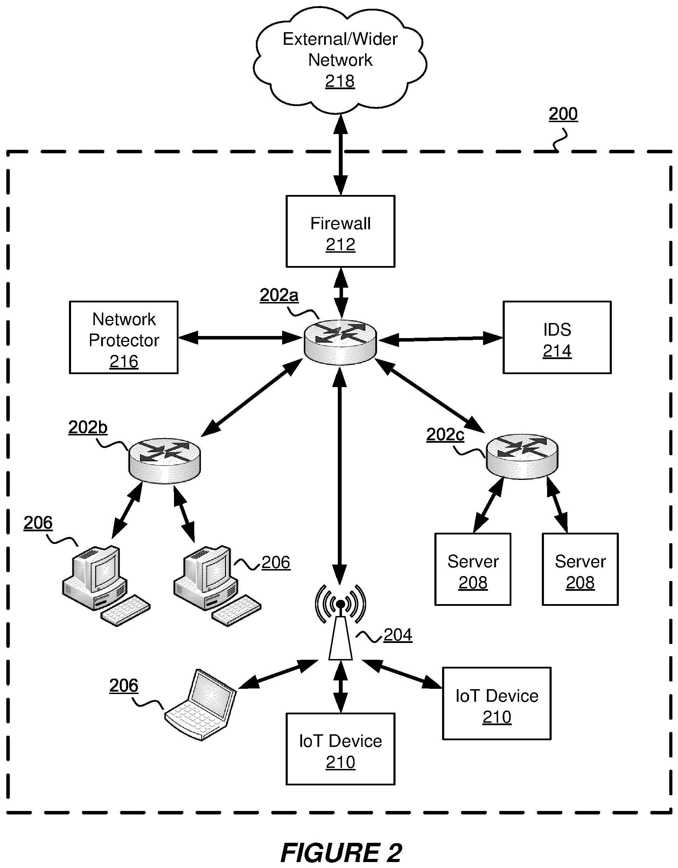

Figure 2 is a block diagram of a computer network 200 which embodiments of the present invention may act to protect. The network 200 comprises a plurality of computer systems 100 including routers 202a, 202b and 202c, wireless access point 204, end-user computing devices 206, servers 208, Internet of Things (IoT) devices 210, as well as various network appliances, such as a firewall 212 and an Intrusion Prevention System (IPS) 214. It will again be appreciated that the computer network 200 that is illustrated is merely exemplary and embodiments of the invention may operate within networks having a different structure, including those having greater or fewer numbers of components. Similarly, some networks may include other components not represented in the exemplary network 200 illustrated in figure 2.

The routers 202a, 202b and 202c manage the flow of traffic within the network 200. For example, end-user computing devices 206 may be connected to router 202b, whilst servers 208 may be connected to another router 202c. The routers may be arranged to pass traffic between end-user computing devices 206 and the servers 208 by passing the traffic between the routers 202a, 202b and 202c, as will be understood by those skilled in the art. Some of the computer systems may be connected to the network 200 wirelessly, such as through the wireless access point 204. Although not shown in figure 2, in other embodiments, the network 200 may comprise a cellular network, with mobile devices connecting wirelessly through the cellular network. For example, many IoT Devices 210 are arranged to connect to a network wirelessly so as to allow convenient installation (although, of course, other IoT Devices may use a wired connection to the network 200 instead).

The network 200 may be connected to an external network 218 (or, indeed, multiple external networks) such that computer systems within the network 200 can communicate with other computer systems in the external network 218. Conceptually, the network 200 may be considered to be a portion (or part) of a larger network, in which case the wider network 218 may be considered to be an external network (even if it is under the same administrative control). As shown in the exemplary network illustrated in figure 2, the only connection between the external/wider network 218 and the network 200 is via the firewall 212. The firewall 212 may be configured to manage the traffic flowing between the other computer systems on the network 200, for example based on firewall rules, such that some types of network traffic are allowed to pass from the network 200 to the external/wider network 218 (or from the external/wider network 218 to the network 200) whilst other types of network traffic may be blocked and prevented from passing between the network 200 and the external/wider network 218. The firewall 212 may also be configured to manage the network traffic flowing between different computer systems within the network 200. Alternatively, additional firewall devices may be included within the network 200 for this purpose.

Although the exemplary network illustrated in figure 2 includes a firewall 212 between the network 200 and the external/wider network 218, it will be appreciated that this is not necessary. For example, in some embodiments, the network 200 may be directly connected to the external/wider network 218 without using a firewall 212. In other embodiments, the network 200 can include multiple connections to external networks, with each such connection entering the network 200 via a different computer system. In yet other embodiments, the network 200 might be a standalone network and may not be directly connected to an external/wider network 218. Of course, it will be appreciated that even standalone networks may be subject to the threats discussed herein. For example, malware can be introduced to the network through removable (or portable) storage media, such as USB storage devices or Optical discs such as CDs or DVDs. Similarly, authorised users may still present a threat, as indeed can unauthorised users (who might, for example, seek to access the network 200 via a wireless connection to the wireless access point 204).

The Intrusion Detection System (IDS) 214 is used to identify threats within the network. As will be appreciated, an Intrusion Prevention System (IPS), which also attempts to respond to mitigate the threats that are identified, may be used instead. One type of IDS (or IPS) that may be used is a Network-based IDS (or NIDS) which runs on a separate computer system within the network 200, such as the IPS 214 illustrated in figure 2. A NIDS monitors traffic within the network 200 and seeks to identify threats within the network from this traffic. This may be achieved, for example, through the use of anomaly-based detection to identify deviations from a model of "good" network traffic (which is typically learnt using machine-learning). It may also attempt to identify malware within the network traffic. This may be achieved, for example, through the use of a number of known techniques, such as signature-based detection, data mining techniques and sandbox detection. Another type of IDS (or IPS) that may be used is a Host-based IDS (or HIDS). The HIDS can monitor inbound and outbound packets from a computer system on which it is installed (the host) to identify any suspicious activity. The HIDS can also monitor the configuration of the system to identify whether any suspicious changes are made to the system (such as unrecognised changes to critical system files) which might indicate that the computer system has been affected (or compromised) by a threat. The HIDS also typically includes anti-virus software which can detect malware using various techniques, such as signature-based detection, data mining techniques and sandbox detection, as is well known in the art. It will be appreciated that not all devices may be suited to having a HIDS installed on them. As an example, IoT devices may typically be less suited to having such software installed. However, the use of a NIDS within the network may help to identify threats affecting such devices, even if no HIDS software can be installed on them. It will be appreciated that different combinations of HIDS and NIDS may be used in different embodiments. For example, in some embodiments a NIDS might be used on its own, whilst in other embodiments HIDS alone might be used. In yet further embodiments both HIDS and NIDS might be used in combination with HIDS being present on t least some of the computer systems in the network in addition to a NIDS.

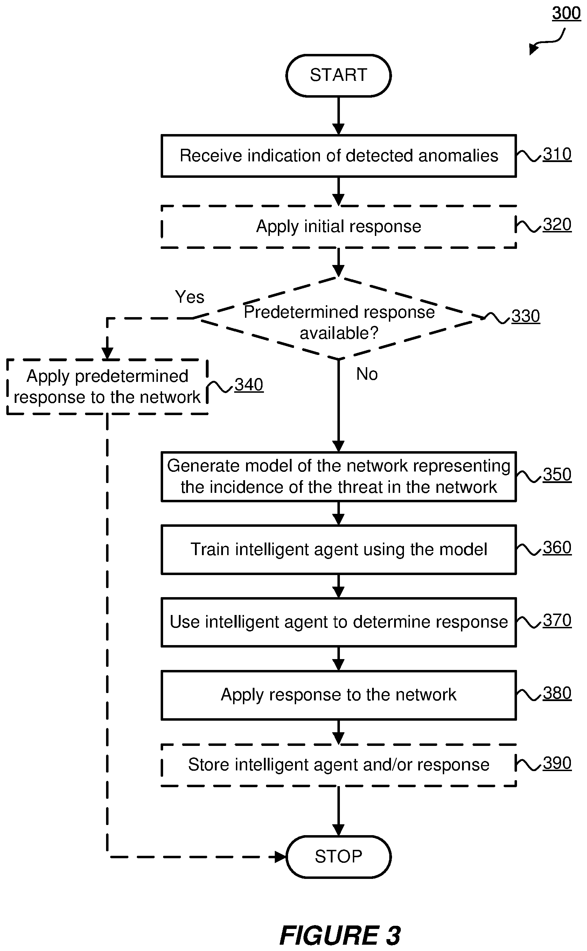

In some embodiments of the invention, as illustrated in figure 2, the computer network 200 may comprise a separate computer system 216 to protect the network in accordance with the method described below. This separate computer system may be referred to herein as a network protector 216. Of course, in other embodiments of the invention, this network protection functionality may be combined in the functions performed by one or more of the other computer systems present in the network, such as the IDS 214. This protection functionality will now be described further in conjunction with Figure 3.

Figure 3 is a flowchart illustrating a method 300 for protecting a network comprising a plurality of computer systems, such as the computer network 200 illustrated in figure 2, in accordance with embodiments of the present invention.

At an operation 310, the method 300 receives an indication that one or more anomalies which have been determined to be associated with a threat have been detected within the network 200. For example, an IDS 214 within the network may provide notifications when it detects an anomaly in the network 200. Specifically, the IDS may scan network traffic to find traffic that is known or believed to be associated with malware infection and may provide notifications when such traffic is identified.

In some cases, any anomalies relating to threats may be provided to the method 300. That is to say, the anomalies may relate to threats which have are already known (e.g. those that have already been seen) as well as unknown threats. Where the anomalies relate to known threats, the indication may include a classification of the threat that they relate to as being a specific type of threat. In other cases, the anomalies may only relate to unknown threats. That is to say anomalies which are believed to be threats (e.g. because they do not relate to normal behaviour in the network), but for which a type of the threat cannot be identified (e.g. because it has not been seen before).

In any case, having received an indication of threat-related anomalies being detected in the network 200, the method may proceed to an optional operation 320 (the dashed lines on figure 3 serving to indicate that the operations that are optional). However, where optional operation 320 is not performed by method 300, the method 300 may proceed to optional operation 330 or, where operation 330 is also not performed by method 300, to operation 350.

At an optional operation 320, the method 300 may cause an initial response to the threat represented by the anomalies received at operation 310. This initial response is predetermined and is invariant to the specific type of threat that the anomalies relate to. The purpose of the initial response is to carry out any actions that may help to contain the threat or else improve understanding of the threat before a more customised and effective response can be determined and applied. As an example, the initial response may comprise placing the computer systems that are associated with the threat under monitoring (or raising the level of monitoring that is being performed on those devices) and/or gathering logs from those computer systems (such as from those devices that are indicated as being infected by a threat in the malware family of threats). As a further example, the initial response may comprise raising a general protection level within the network, such as by configuring the firewall 212 to use a more restrictive set of firewall rules or by configuring the IDS 214 to carry out more intensive scanning operations. As will be appreciated, any suitable actions which help to contain the threat and/or improve understanding of the detected threat may be carried out as an initial response. These actions may be determined in advance by network administrators and defined using rules or scripts which can be automatically run by the method 300 at operation 320. Although it is intended that the initial response that is applied to the network 200 at operation 320 is applied prior to any response that may be determined by an intelligent agent at an operation 380, which will be discussed further below, it will be appreciated, that the method 300 may continue processing subsequent operations before the initial response is completely effected. This means that some of the subsequent operations in the method 300 may be performed or completed at the same time or before the initial response is fully applied to the network 200. Indeed, if for some unexpected reason the initial response cannot be fully effected prior to a more customised response being determined (at operations 370 or 340), the method 300 may abandon the application of the initial response and apply the customised response instead. In any case, having caused the initial response to be applied to the network 200, the method 300 may proceed to an optional operation 330. Alternatively, where operation 330 is not performed by method 300, the method proceeds to an operation 350.

At an optional operation 330, the method 300 determines whether a predetermined response to the threat associated with the anomalies is available. In particular, where the threat is a threat that is already known, a suitable response for handling that threat may have already been determined (e.g. as part of a network incident response playbook). These predetermined responses for countering known threats may be stored in a database (although any other suitable form of storage may be used instead).

An indication of the specific type of threat to which the anomalies relate may be included in the indication that is received during operation 310. For example, the IDS 214 may attempt to classify anomalies that it detects as relating to a specific type of threat and may include that classification when it provides indications that anomalies have been detected. However, the classification of the threat may alternatively by carried out by any other system, including by the computer system performing the method 300 as part of this operation 330. Of course, where a threat is a new threat (i.e. an unknown threat), it will not be possible to classify the threat as being a specific type of threat. Therefore, such threats may simply remain unclassified (or else classified as being "*unknown*").

The method 300 may search the database to determine whether a predetermined response to the specific type of threat is available. In some cases, the predetermined responses may be simply associated with a specific type of threat to which they relate. That is to say, whenever that specific type of threat is encountered, the same predetermined response should be applied and so may be considered to be network-wide predetermined responses since they are applicable regardless of which parts of the network are affected by the threat. However, in other cases, the predetermined responses may also be associated with particular computer systems or portions of the network 200. That is to say, those predetermined responses are expected to be enacted whenever that specific type of threat is detected in respect of those computer systems or portions of the network 200. The specific computer systems or portions of the network 200 that are affected by the threat may be referred to herein as the incidence of the threat in the network 200 (which will probably change over time as the threat propagates through the network or as actions are taken to counter or mitigate the threat). The incidence of the threat in the network can be determined from the anomalies that were indicated in operation 310. Specifically, the anomalies may each indicate a respective computer system or portion of the network to which the anomaly relates. Accordingly, the search of the database may also take into account the current incidence of the threat (that is, the incidence at the time of the anomalies) to identify any predetermined responses that are relevant to both the specific type of threat and its current incidence pattern.

Where a predetermined response is determined to be available, the method 300 proceeds to operation 340.

At an optional operation 340, the method 300 applies the predetermined response to the network 200. That is to say, it retrieves a set of actions that constitute the predetermined response and causes those actions to be enacted in respect of the network. Having applied the predetermined response to address the threat, the method 300 may then end.

However, It will be appreciated that since the predetermined response relates to a specific type of threat, where the threat is a new threat no predetermined response will be identified because the specific type of the threat will not be known. Of course, even if the threat is known (such that the specific type of the threat can be identified), it is entirely possible that no predetermined response has yet been determined for that threat in relation to the network 200 that is being protected. Accordingly, where it is determined at operation 330 that no predetermined response is available to the threat, the method proceeds to an operation 350 in order to determine an appropriate response to the threat.

At operation 350, the method 300 generates a model of the network. The model is a simplified representation of the network which includes a representation of the network's topology as well as the incidence of the threat within the network.

As will be understood by those skilled in the art, the network's topology can be represented by a graph data structure, in which the vertices (or nodes) represent respective computer systems within the network and the edges (or links) represent the communications links between the computer systems. In some cases, a graph representation of the network may be defined manually. However, in other cases, it can be automatically inferred from monitoring network traffic (or even actively probed). Where the network 200 is a Software-Defined Network (SDN), the topology may be obtained by querying a controller that is responsible for configuring the network.

The incidence of the threat within the network can be represented in the graph data structure by attaching attributes (or properties) to each vertex or edge. The type of attributes that are used to represent the incidence of the threat may depend upon the general category (or family) of threat being considered. For example, where the threat belongs to the malware family of threats, the incidence may be represented by an attribute for each vertex of the graph indicating a respective status of each computer system - that is to say, whether the computer system represented by that vertex has been determined to be infected by the malware. In some cases, this attribute may be a simple binary or Boolean value indicating whether the computer system is currently infected (or not). In other cases, a numerical value representing a probability (or confidence in the determination) that the computer system is infected may be used as the attribute. As a further example, where the threat belongs to the distributed denial of service (DDoS) family of threats, the incidence may be represented by an attribute for each edge of the graph indicating the bandwidth utilisation (such as a total amount of traffic or a percentage of overall bandwidth capacity used) for the associated communications link in the network. Of course, it will be appreciated that any other suitable attributes may be used instead, or in addition, to represent the current incidence of the threat in the network 200.

Accordingly, in some cases, the method 300 may determine a general category (or family) for the threat, such as whether the threat is a malware threat or a distributed denial of service family of threat, and may select appropriate attributes to include in the graph-based representation of the network 200 based on the determined general category. Of course, in other cases, the general category of the threat may be provided as part of the indication of the anomalies received in operation 310. For example, the IDS 214 may classify the threat into a general category (or family) of threats. It will be appreciated, that this classification can be made based on the general characteristics of the threat that have been observed even if it is not possible to classify the threat as being a specific type of threat (e.g. a specific type of malware or a DDoS attack carried out using a particular type of strategy). However, in other cases, the attributes that are to be included may simply be predetermined.

The values for the attributes representing the incidence of the threat may be determined directly from data provided as part of the indication of the one or more anomalies that were detected in the network, as received during operation 310. However, in other cases, the method 300 may query various computer systems on the network 200 to obtain the necessary information.

In any case, having generated a model of the network 200 at operation 350, the method 300 proceeds to an operation 360.

At operation 360, the method 300 trains an intelligent agent (IA) to generate a response to the threat.

An intelligent agent is a form of artificial intelligence which can learn to carry out actions on an environment (in this case) in a manner which enables it to achieve a particular goal. To do this, reinforcement learning is used to train the intelligent agent during a training period, allowing the intelligent agent to develop an internal "model" of the environment that represents its beliefs or understanding about that environment as they relate towards maximising the return from an objective function which encapsulates the goals that the intelligent agent should try to achieve. Accordingly, this objective function, which may be referred to as a reward function, drives the intelligent agent's behaviour as the intelligent agent will learn how best to maximise the value of that function.

In order to train the intelligent agent, the model of the network 200 that was generated at operation 350 is used. The model of the network enables the effectiveness of taking different actions to counter the threat to be evaluated. In particular, a threat propagation model can be used together with the properties representing the incidence of the threat in the model of the network to simulate the spread of the threat for through the network at a plurality of points (or steps) in time. The use of the model of the network means that the intelligent agent can experiment with different actions and observe the spread of the malware following those actions without actually interfering with the network 200 itself. Through these experiments on the model of the network, the intelligent agent can learn the best actions to take to counter the threat.

The intelligent agent is provided with a set of possible actions $A = \{a_1, a_2, ..., a_n\}$ that it can take. As a simplified example, the intelligent agent may be provided with a single type of action, such as removing (or isolating) a computer system from the network. Accordingly, the set of possible actions $A$ may include a respective action which represents that type of action (e.g. removing or isolating a computer system) being taken in respect of a specific computer system in the network. For example, a first action $a_1$ in the set may represent removing a first computer system from the network, a second action $a_2$ in the set may represent removing a second computer system from the network, and so on. The set of actions may also include an action (e.g. $a_n$) which represents no action being taking. Of course, the set of actions can include other types of action. Again, each individual action may relate to a type of action being taken in relation to a specific element (such as a computer system) within the network 200. The types of actions that are included in the set of possible actions $A$, may vary depending on the general category (or family) of the threat. For example, where the threat is a malware threat, the set of actions may include one or more or all of the following types of action: upgrade or downgrade the network defence level; running enhanced detection on a computer system; deploying an Intrusion Detection System (IDS); and changing firewall rules. As a further example, where the threat belongs to the distributed denial of service family of threats, other actions may be included in the set of possible actions $A$. For example, where the network 200 is a Software Defined Network, the actions could include removing links, rerouting traffic, or even adding additional links. However, in other cases, a generic intelligent agent may be trained (that is, an intelligent agent that responds to generic threats as opposed to those belonging to a particular threat family), in which case all of these exemplary actions may be available for the intelligent agent to use. Indeed, in general, the set of actions $A$ can include any suitable action for countering the threat.

As mentioned above, the intelligent agent is trained using a reinforcement learning technique. Any suitable reinforcement learning technique may be used, such as Deep-Q Learning, Policy Gradient Methods or Actor-Critic Methods. Regardless of the technique used, a reward function is defined which drives the intelligent agent's behaviour. In general, the reward function should be defined in such a way that a lower score is provided when a greater number of computer systems become infected. This means that the intelligent agent will aim to minimise infections within the network. However, there are additional considerations that can be factored into the reward function. The reward function may also be defined in a way that means that more intrusive or inconvenient actions (such as isolating a computer system from the network) are penalised (by lowering the score) to discourage the agent from overly relying on actions that, although effective at preventing the spread of the threat, will likely cause other issues in the network. The choice of penalty needs to be balanced against the effectiveness of that action. That is, it should be set at a level where the intelligent agent may still choose to take that action provided it is effective enough (e.g. a computer system should be isolated from the network when doing so will prevent the spread of the threat to multiple other computer systems that do not then also need to be isolated). Another consideration that may be factored into the definition of the reward function, in some cases, is the relative value of different computer systems within the network. That is to say, the reward function may be defined in such a way that an action resulting in a more important computer system being infected will result in a lower score than if a less important computer system were to be infected (*ceteris paribus*). It will be appreciated that there are many different ways in which a reward function can be defined for use with the present invention and indeed that any suitable reward function may be used. However, as a simplified example, for the purposes of illustrating the invention, a reward function r may be defined as follows:

$$r = \begin{cases} -10 \text{ if device is infected} \\ -11 \text{ if device is infected and isolated} \\ -2 \text{ if device is isolated but not infected} \\ \quad 0 \text{ otherwise.} \end{cases}$$

That is to say, the score is adjusted by -10 when a device is infected, by -11 when a device is infected and isolated (or removed) from the network, by -2 when action is taken to isolate a device that has not been infected (i.e. to prevent it communicating via the network) and by 0 in all other cases. The justification for this reward scheme is that every computer system that is infected is an undesirable outcome, hence a negative reward. Of course, any reasonable negative number could be chosen (such as -1), however -10 makes it easier to understand the rewards for isolating devices. Where a device is already infected and then isolated, the reward of -11 reflects that effort is required to remove the computer system from the network together with the fact that the computer system has nonetheless been infected. However, the penalty for removing an infected device should not be worse than leaving it in place to infect other devices. For example, if this reward was reduced from -11 to -20, then the effort to remove an infected device is effectively being scored as -10 (since the reward for an infected device is -10), which is the same as one newly infected device. This might encourage the agent to allow the malware to spread instead of removing already infected devices, which would cause more damage. The reward for removing an uninfected device is -2, since we are expending effort to remove the device (which is given a value of -1 in line with the reward of -11 to remove an infected device), but we are also interacting with a device that is operating normally, which means the device user will be inconvenienced. We give this inconvenience a score of -1, since it is significantly better to inconvenience a user than allow the malware to spread to a new device (it is noted that the user of an infected device is considered to already be inconvenienced, so this additional -1 score is not applied to that earlier case). Finally, if there is no change to the system, we issue a reward of 0.

During training, the agent can observe the incidence of the threat in the model, as represented by properties on the vertices and/or edges of the model, and can make a prediction of which action should be taken. Specifically, the agent selects an action by taking the state of the network (where the state is the incidence of the threat within the network) as an input to its neural network and outputting a score associated with each possible action. In the case of Q-learning this score is the Q-value. The agent then selects the action with the maximum Q-value since it wants to maximise the future reward. The action is then executed in the simulation. That is to say, the model is adapted to reflect the action that has been taken. For example, by removing any edges connecting a vertex representing a computer system that has been isolated. The actions may also be associated with a certain time step required to enact them. The threat propagation model is then used to determine how the threat might spread through the network following the action (during an associated time step), given the current state of the network, to produce a new state for the network (i.e. a new incidence of the threat within the network). The agent then receives a reward by scoring the new state of the network in accordance with the reward function and comparing that to the value provided by the reward function for the previous state. The state of the network prior to an action, the action taken, the reward, the resulting state of the network are stored together as an experience (for example as a tuple), together with a terminal indicator that indicates whether the malware can propagate any further within the network following the action. This experience is stored as part of the agent's experience memory, which is used to train the agent. The agent's experience memory stores a certain number of experiences that the intelligent agent has created by interacting with the model of the network. As an example, the experience memory may store the last 2048 experiences (although other sizes of memory may be used instead).

The experience memory is used to train the intelligent agent whenever a reward is collected. This training process is fairly simple. The agent selects a random sample of a predetermined number of experiences from its experience memory. In this example a sample size of 128 is used, however other sample sizes may be used instead. The intelligent agent then computes the Q-values associated with each action based on those experiences. Where there are not enough experiences in the experience memory to select a sample, the agent may simply wait for the experiences to accumulate without undergoing any training. The Q-values are computed by bootstrapping the Bellman equation:

$$Q(s,a) = \begin{cases} R(s,a) + \gamma \max Q(s',a') & if\, s'\, is\, not\, terminal. \\ R(s,a) & if\, s'\, is\, termnal. \end{cases}$$

In this equation, the variable s represents the state of the network before the action, while s' represents the state after. The variable $a$ represents the action. The variable $\gamma$ represents the exploration probability which is a predetermined parameter controlling the general behaviour of the intelligent agent (as will be understood by those skilled in the art). The function $R(s, a)$ provides the reward for taking action $a$ in state s, whilst the function $Q(s, a)$ provides the Q-value for taking action $a$ in state s. Having obtained the Q-values in this manner, the agent's neural network can then trained using Adam optimisation on a mean square error loss function. This process involves matching the inputs to the neural network (i.e the state of the network and the action that is taken) to the output (i.e. the Q-value).

The training of the intelligent agent is carried out in episodes, whereby an episode involves the intelligent agent performing actions to modify the state of the model of the network until the network reaches a terminal state (that is, where the threat can no longer propagate within the network). The intelligent agent is trained using a predetermined number of episodes of simulations. In this example, the number of episodes of simulation used to train the intelligent agent $2^{12} = 4096$ episodes. However, any appropriate number of episodes which give the intelligent agent enough opportunity to learn about the impact of its actions on the network on which it is acting can be used instead. Once these simulations and training are complete, the intelligent agent should have enough experience to be able select the most appropriate actions to respond effectively to the malware.

In some cases, a simple generic propagation model may be used to represent the unknown threat. For example a malware propagation model may simply be set to randomly infect the neighbours of infected nodes. In other cases, the propagation may be customised based on initial observations of the threat (e.g. from the one or more anomalies caused by the threat). For example, a propagation rate of the threat in the network may be estimated from the number of machines that have reported anomalies within a certain period of time prior to the anomalies being provided to the method 300 at operation 310. The threat propagation model may then be configured to reflect the propagation rate of the threat in the network. Similarly, the types of computer systems for which anomalies have been reported can be analysed to estimate a susceptibility of different types of computer systems to the threat. The threat propagation model may then be configured to reflect the susceptibility of different types of computer systems to the threat.

As will be discussed in relation to operation 390 below. In some cases, a previously trained intelligent agent may be used as a starting point for training the intelligent agent during this operation 360. This means that the intelligent agent may already possesses a certain amount of knowledge regarding the network and the impact of the available actions, which may allow it to be trained in a fewer number of episodes compared to starting with a completely untrained intelligent agent. Where a previously trained intelligent agent is used as a starting point, the training that is performed during this operation 360 may serve to adapt the intelligent agent to respond to the current incidence of the detected threat.

In any case, having trained the intelligent agent at operation 360, the method 300 proceeds to an operation 370.

At an operation 370, the method 300 uses the intelligent agent to determine a response to the threat. That is to say, the intelligent agent is used to predict which action(s) should be taken in respect of the physical network based on its current state to counter the threat. These actions constitute the response that should be applied the network. The method then proceeds to an operation 380.

At an operation 380, the method 300 applies the response that was determined by the intelligent agent at operation to the 370. That is to say, the method 300 causes one or more actions that constitute the response determined by the intelligent agent to be enacted in respect of the network. Having applied the response to the network, the method proceeds to an optional operation 390 or, if operation 390 is not present in the method 300, the method 300 ends.

At optional operation 390, the method 300 stores the intelligent agent that was trained at operation 360, the response that was determined to the threat at operation 380, or both. By storing the intelligent agent and/or the response, responses to future anomalies may be handled more efficiently by the method.

In particular, the response may be stored as a predetermined response for any future occurrences of the threat sharing the same or similar incidence pattern. Therefore, in a future iteration of the method in relation to a future occurrence of the threat, the method can retrieve the response at operation 330 as a predetermined response and apply it straight away at operation 340 without needing to carry out the other operations 350, 360, 370 and 380. Accordingly, the method 300 may store the response in the database of predetermined responses that is used during operation 330. In this manner, the knowledge of predetermined responses for protecting the network 200 can grow over time.

Similarly, the intelligent agent itself may be stored in any suitable storage for retrieval during a future iteration of method 300. This means that the intelligent agent can be used as the starting point for training an intelligent agent to respond to another threat to the network 200 in the future (such as one having a different incidence in the network 200). As discussed above, during the training of the intelligent agent via reinforcement learning, the intelligent agent develops an internal "model" of the environment that can help it achieve the goals specified by the reward function. Therefore, even though future iterations of the method 300 may be concerned with different incidences of threats in the network, it is likely that the some of the knowledge encapsulated in the intelligent agent's internal "model" will be transferable. As a result, starting with an intelligent agent that has already undergone some training in relation to the network's specific topology may improve the speed of training and/or the effectiveness of the intelligent agent in achieving its goals.

Having stored the intelligent agent, determined response, or both, the method 300 ends.

As will be appreciated from the foregoing discussion of the invention, a way of automatically responding to threats to a network is provided that can determine a response to a threat even where no consideration has previously been given as to how a particular threat should be responded to, such as where the threat has not have been previously encountered. Therefore, the incident response process may be improved and the time and effort required of network administrators to investigate and respond to alerts for the network may be reduced.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. A computer implemented method (300) for protecting a network (200) comprising a plurality of computer systems, the method comprising:

   receiving (310) an indication that one or more anomalies which have been determined to be associated with a threat have been detected within the network;
   generating (350) a model of the network for simulating the propagation of the threat within the network, the model comprising one or more properties representing the incidence of the threat within the network;
   training (360) an intelligent agent to generate a response to the threat, the intelligent agent being trained using a reinforcement learning technique by using the model of the network to evaluate the effectiveness of taking different actions to counter the threat based on a simulated propagation of the threat within the model, the simulated propagation being determined based on a threat propagation model and the one or more properties representing the incidence of the threat within the network;
   using (370) the intelligent agent to determine a response to the threat, the response comprising one or more actions to be taken in relation to the network; and
   applying (380) the response to the network by causing the one or more actions to be taken in relation to the network.

2. The method of claim 1 further comprising determining whether a predetermined response to the threat is available, wherein:

   the predetermined response is applied to the network in response to determining that a predetermined response is available; and
   the steps of generating a model of the network, training an intelligent agent and using the intelligent agent to determine a response to the threat are performed in response to a determination that no predetermined response is available.

3. The method of claim 1 or claim 2 further comprising storing the response to the threat that was determined by the intelligent agent to be used as predetermined response to the threat in the future.

4. The method of any one of the preceding claims, wherein the intelligent agent that is trained is an intelligent agent that has already been trained to generate a response to a previous threat within the network and the training serves to adapt the intelligent agent to respond to the detected threat.

5. The method of any one of the preceding claims further comprising causing a predetermined initial response to be applied to the network prior to determining the response to the threat using the intelligent agent.

6. The method of any one of the preceding claims further comprising:

   estimating a propagation rate of the threat in the network from the one or more anomalies; and
   configuring the threat propagation model to reflect the estimated propagation rate of the threat in the network.

7. The method of any one of the preceding claims, wherein the threat is a malware threat and the one or more properties representing the incidence of the threat comprise a respective status of each of the plurality of computer systems indicating whether that computer system has been determined to have been infected by the malware.

8. The method of claim 7, wherein the one or more actions comprise one or more of:

   isolating a computer system from the network;
   upgrading a network defence level;
   downgrading a network defence level;
   running enhanced detection on one or more computer systems;
   deploying an intrusion detection system;
   changing one or more firewall rules.

9. The method of any one of claims 1 to 6, wherein the threat is a Distributed Denial-of-Service, DDoS, attack and the one or more properties representing the incidence of the threat comprise an indication of a respective bandwidth utilisation for each link in the network.

10. The method of claim 9, wherein the one or more actions comprise one or more of:

    isolating a computer system from the network;
    reconfiguring the network to remove one or more links;
    reconfiguring the network to reroute traffic; and
    reconfiguring the network to add one or more additional links

11. A computer system comprising a processor and a memory storing computer program code for performing the steps of any one of the preceding claims.

12. A computer program which, when executed by one or more processors, is arranged to carry out a method according to any one of claims 1 to 10.


**Patentansprüche**

1. Computerimplementiertes Verfahren (300) zum Schützen eines Netzwerks (200), das eine Vielzahl von Computersystemen umfasst, wobei das Verfahren umfasst:

    Empfangen (310) einer Angabe, dass eine oder mehrere Anomalie(n), die als mit einer Bedrohung assoziiert bestimmt wurden, innerhalb des Netzwerks detektiert wurden;
    Erzeugen (350) eines Modells des Netzwerks zum Simulieren der Ausbreitung der Bedrohung innerhalb des Netzwerks, wobei das Modell eine oder mehrere Eigenschaft(en) umfasst, die die Inzidenz der Bedrohung innerhalb des Netzwerks repräsentiert/repräsentieren;
    Trainieren (360) eines intelligenten Agenten, um eine Reaktion auf die Bedrohung zu erzeugen, wobei der intelligente Agent unter Verwendung einer Technik des bestärkenden Lernens trainiert wird, indem das Modell des Netzwerks verwendet wird, um die Effektivität des Durchführens unterschiedlicher Aktionen zur Bekämpfung der Bedrohung basierend auf einer simulierten Ausbreitung der Bedrohung innerhalb des Modells zu bewerten, wobei die simulierte Ausbreitung basierend auf einem Bedrohungsausbreitungsmodell bestimmt wird und die eine oder die mehreren Eigenschaft(en) die Inzidenz der Bedrohung innerhalb des Netzwerks repräsentiert/-repräsentieren;
    Verwenden (370) des intelligenten Agenten, um eine Reaktion auf die Bedrohung zu bestimmen, wobei die Reaktion eine oder mehrere Aktion(en) umfasst, die in Bezug auf das Netzwerk durchzuführen ist/sind; und
    Anwenden (380) der Reaktion auf das Netzwerk, indem bewirkt wird, dass die eine oder die mehreren Aktion(en) in Bezug auf das Netzwerk durchgeführt wird/werden.

2. Verfahren nach Anspruch 1, das ferner ein Bestimmen umfasst, ob eine vorbestimmte Reaktion auf die Bedrohung verfügbar ist, wobei:

    die vorbestimmte Reaktion als Reaktion auf das Bestimmen, dass eine vorbestimmte Reaktion verfügbar ist, auf das Netzwerk angewendet wird und
    die Schritte des Erzeugens eines Modells des Netzwerks, des Trainierens eines intelligenten Agenten und des Verwendens des intelligenten Agenten, um eine Reaktion auf die Bedrohung zu bestimmen, als Reaktion auf eine Bestimmung durchgeführt werden, dass keine vorbestimmte Reaktion verfügbar ist.

3. Verfahren nach Anspruch 1 oder Anspruch 2, das ferner ein Speichern der Reaktion auf die Bedrohung, die durch den intelligenten Agenten bestimmt wurde, um in der Zukunft als vorbestimmte Reaktion auf die Bedrohung verwendet zu werden, umfasst.

4. Verfahren nach einem der vorhergehenden Ansprüche, wobei der intelligente Agent, der trainiert wird, ein intelligenter Agent ist, der bereits trainiert wurde, um eine Reaktion auf eine vorherige Bedrohung innerhalb des Netzwerks zu erzeugen, und das Trainieren dazu dient, den intelligenten Agenten anzupassen, um auf die detektierte Bedrohung zu reagieren.

5. Verfahren nach einem der vorhergehenden Ansprüche, das ferner ein Bewirken umfasst, dass eine vorbestimmte Anfangsreaktion auf das Netzwerk angewendet wird, bevor die Reaktion auf die Bedrohung unter Verwendung des intelligenten Agenten bestimmt wird.

6. Verfahren nach einem der vorhergehenden Ansprüche, das ferner umfasst:

Schätzen einer Ausbreitungsrate der Bedrohung im Netzwerk aus der einen oder den mehreren Anomalie(n) und Konfigurieren des Bedrohungsausbreitungsmodells, um die geschätzte Ausbreitungsrate der Bedrohung im Netzwerk widerzuspiegeln.

7. Verfahren nach einem der vorhergehenden Ansprüche, wobei die Bedrohung eine Malware-Bedrohung ist und die eine oder die mehreren Eigenschaft(en), die die Inzidenz der Bedrohung repräsentiert/repräsentieren, einen jeweiligen Status jedes der Vielzahl von Computersystemen umfasst/umfassen, der angibt, ob bestimmt wurde, dass dieses Computersystem durch die Malware infiziert wurde.

8. Verfahren nach Anspruch 7, wobei die eine oder die mehreren Aktion(en) eines oder mehrere umfassen von:

Isolieren eines Computersystems vom Netzwerk;
Erhöhen einer Netzwerkverteidigungsebene;
Verringern einer Netzwerkverteidigungsebene;
Ausführen einer erweiterten Detektion auf einem oder mehreren Computersystem(en);
Einsetzen eines Angriffsdetektionssystems;
Ändern einer oder mehrerer Firewall-Regel(n).

9. Verfahren nach einem der Ansprüche 1 bis 6, wobei die Bedrohung ein Distributed-Denial-of-Service-Angriff, DDoS-Angriff, ist und die eine oder die mehreren Eigenschaft(en), die die Inzidenz der Bedrohung repräsentiert/repräsentieren, eine Angabe einer jeweiligen Bandbreitenauslastung für jede Verbindung im Netzwerk umfasst/umfassen.

10. Verfahren nach Anspruch 9, wobei die eine oder die mehreren Aktion(en) eines oder mehrere umfassen von:

Isolieren eines Computersystems vom Netzwerk;
Rekonfigurieren des Netzwerks, um eine oder mehrere Verbindung(en) zu entfernen;
Rekonfigurieren des Netzwerks, um Datenverkehr umzuleiten; und
Rekonfigurieren des Netzwerks, um eine oder mehrere zusätzliche Verbindung(en) hinzuzufügen.

11. Computersystem, das einen Prozessor und einen Speicher, der Computerprogrammcode zum Durchführen der Schritte nach einem der vorhergehenden Ansprüche speichert, umfasst.

12. Computerprogramm, das, wenn es durch einen oder mehrere Prozessor(en) ausgeführt wird, dazu ausgelegt ist, ein Verfahren nach einem der Ansprüche 1 bis 10 auszuführen.

**Revendications**

1. Procédé mis en œuvre par ordinateur (300) pour protéger un réseau (200) comprenant une pluralité de systèmes d'ordinateur, le procédé comprenant les faits :

de recevoir (310) une indication qu'une ou plusieurs anomalies, qui ont été déterminées comme étant associées à une menace, ont été détectées à l'intérieur du réseau ;
de générer (350) un modèle du réseau pour simuler la propagation de la menace à l'intérieur du réseau, le modèle comprenant une ou plusieurs propriétés représentant l'incidence de la menace à l'intérieur du réseau ;
d'entraîner (360) un agent intelligent pour générer une réponse à la menace, l'agent intelligent étant entraîné en utilisant une technique d'apprentissage par renforcement en utilisant le modèle du réseau pour évaluer l'efficacité de l'exécution de différentes actions pour contrer la menace sur la base d'une propagation simulée de la menace à l'intérieur du modèle, la propagation simulée étant déterminée sur la base d'un modèle de propagation de menace et de l'une ou des plusieurs propriétés représentant l'incidence de la menace à l'intérieur du réseau ;
d'utiliser (370) l'agent intelligent pour déterminer une réponse à la menace, la réponse comprenant une ou plusieurs actions devant être exécutées relativement au réseau ; et
d'appliquer (380) la réponse au réseau en amenant l'une ou les plusieurs actions à être exécutées relativement au réseau.

**2.** Procédé de la revendication 1, comprenant en outre le fait de déterminer si une réponse prédéterminée à la menace est disponible, dans lequel :

la réponse prédéterminée est appliquée au réseau en réponse au fait de déterminer qu'une réponse prédéterminée est disponible ; et
les étapes consistant à générer un modèle du réseau, à entraîner un agent intelligent, et à utiliser l'agent intelligent pour déterminer une réponse à la menace sont réalisées en réponse au fait de déterminer qu'aucune réponse prédéterminée n'est disponible.

**3.** Procédé de la revendication 1 ou la revendication 2, comprenant en outre le fait de stocker la réponse à la menace qui a été déterminée par l'agent intelligent comme devant être utilisée en tant que réponse prédéterminée à la menace à l'avenir.

**4.** Procédé de l'une quelconque des revendications précédentes, dans lequel l'agent intelligent qui est entraîné est un agent intelligent qui a déjà été entraîné pour générer une réponse à une menace précédente à l'intérieur du réseau et le fait d'entraîner sert à adapter l'agent intelligent pour qu'il réponde à la menace détectée.

**5.** Procédé de l'une quelconque des revendications précédentes, comprenant en outre le fait d'amener une réponse initiale prédéterminée à être appliquée au réseau avant le fait de déterminer la réponse à la menace en utilisant l'agent intelligent.

**6.** Procédé de l'une quelconque des revendications précédentes, comprenant en outre les faits :

d'estimer une vitesse de propagation de la menace dans le réseau, à partir de l'une ou des plusieurs anomalies ; et
de configurer le modèle de propagation de menace pour refléter la vitesse de propagation estimée de la menace dans le réseau.

**7.** Procédé de l'une quelconque des revendications précédentes, dans lequel la menace est une menace de logiciel malveillant et l'une ou des plusieurs propriétés représentant l'incidence de la menace comprennent un état respectif de chacun de la pluralité de systèmes d'ordinateur indiquant s'il a été déterminé que ce système d'ordinateur a été infecté par le logiciel malveillant.

**8.** Procédé de la revendication 7, dans lequel l'une ou les plusieurs actions comprennent un ou plusieurs faits parmi :

isoler, du réseau, un système d'ordinateur ;
faire passer un niveau de défense de réseau à une version supérieure ;
faire passer un niveau de défense de réseau à une version inférieure ;
accomplir une détection améliorée sur un ou plusieurs systèmes d'ordinateur ;
déployer un système de détection d'intrusion ;
changer une ou plusieurs règles de pare-feu.

**9.** Procédé de l'une quelconque des revendications 1 à 6, dans lequel la menace est une attaque DDoS, Distributed Denial-of-Service, et l'une ou les plusieurs propriétés représentant l'incidence de la menace comprennent une indication d'une utilisation de largeur de bande respective pour chaque liaison dans le réseau.

**10.** Procédé de la revendication 9, dans lequel l'une ou les plusieurs actions comprennent un ou plusieurs faits parmi :

isoler, du réseau, un système d'ordinateur ;
reconfigurer le réseau pour éliminer une ou plusieurs liaisons ;
reconfigurer le réseau pour rerouter un trafic ; et
reconfigurer le réseau pour ajouter une ou plusieurs liaisons supplémentaires.

**11.** Système d'ordinateur, comprenant un processeur et une mémoire stockant un code de programme d'ordinateur pour réaliser les étapes de l'une quelconque des revendications précédentes.

**12.** Programme d'ordinateur qui, lorsqu'il est exécuté par un ou plusieurs processeurs, est agencé pour effectuer un procédé selon l'une quelconque des revendications 1 à 10.

**FIGURE 1**

**FIGURE 2**

300

START

Receive indication of detected anomalies — 310

Apply initial response — 320

Yes — Predetermined response available? — 330

No

Apply predetermined response to the network — 340

Generate model of the network representing the incidence of the threat in the network — 350

Train intelligent agent using the model — 360

Use intelligent agent to determine response — 370

Apply response to the network — 380

Store intelligent agent and/or response — 390

STOP

**FIGURE 3**

**REFERENCES CITED IN THE DESCRIPTION**

**Patent documents cited in the description**

- US 20050257269 A1
- US 20210064762 A1

- WO 2021001236 A1

**Non-patent literature cited in the description**

- **NIKOLOPOULOS**. *Preventing Malware Pandemics in Mobile Devices by Establishing Response-time Bounds*